# EUROPÄISCHE PATENTANMELDUNG

(11) **EP 1 091 505 A2**
(43) Veröffentlichungstag der Anmeldung: **11.04.2001**
(21) Anmeldenummer: 00118559.4
(22) Anmeldetag: 26.08.2000
(51) Int. Cl.: H04B 7/185

(54) **Satellitengestütztes Kommunikationssystem mit Rückkanalführung über terrestrische Mobilfunknetze**

(30) Priorität: 09.10.1999 DE 19948753
(71) Anmelder: Deutsche Telekom AG, 53113 Bonn (DE)
(72) Erfinder: Schrimpf, Werner, 52179 Bonn (DE)

(57) **Zusammenfassung**

Die Erfindung betrifft ein Satellitengestütztes Kommunikationssystem für den Austausch von Informationen zwischen zwei Partnern, wobei der zweite Partner über eine Satellitenübertragungsstrecke Daten an den ersten Partner überträgt, wobei der erste Partner über eine terrestrische Mobilfunkverbindung Daten an den zweiten Partner überträgt.

## Beschreibung

Die vorliegende Erfindung betrifft ein satellitengestütztes Kommunikationssystem für den Austausch von Informationen zwischen zwei Partnern, wobei der zweite Partner über eine Satellitenübertragungsstrecke Daten an den ersten Partner überträgt.

Im heutigen Informationszeitalter werden vermehrt große Datenmengen von einem Ort zum anderen gesendet. Das immer größer werdende Datenaufkommen erfordert Übertragungsstrecken mit hohen Übertragungskapazitäten. Dies zeigt sich insbesondere bei der Nutzung des Internets oder von Online-Diensten, wie zum Beispiel 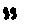 T-Online". Im terrestrischen Bereich, das heißt bei der Übertragung über z. B. festverlegte Datenleitungen, sind die Übertragungsgeschwindigkeiten durch den installierten Dienst begrenzt. So kann im analogen Bereich mittels eines Modems eine maximale Übertragungskapazität von 56 kbit/s erzielt werden. Sofern ein ISDN-Anschluß vorhanden ist, können bereits 64 kbit/s, bei Kanalbündelung sogar 128 kbit/s übertragen werden. Eine erhebliche Steigerung der Übertragungsgeschwindigkeit wird durch das xDSL-Verfahren, welches zum Zeitpunkt der Patentanmeldung eingeführt wird, erzielt. Mittels des xDSL-Verfahrens lassen sich Übertragungsraten von 768 kbit/s erzeugen, welches damit 12mal so schnell wie eine ISDN-Übertragung ist. Das xDSL-Verfahren läßt sich jedoch nur dort einsetzen, wo bereits die technischen Voraussetzungen erfüllt sind, das heißt die benötigten terrestrischen Leitungswege verlegt sind.

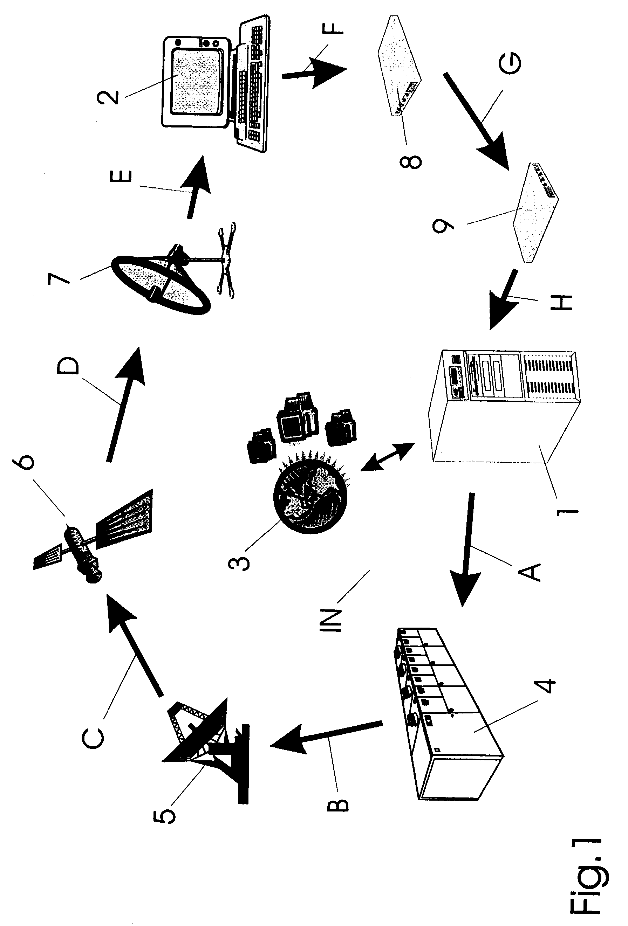

Eine alternative Zugangsvariante zum Internet bzw. zu einem Online-Dienst stellt das satellitengestützte Zugangsnetz dar. Durch die hohen Übertragungsraten via Satellit lassen sich dabei mittel- und breitbandige Zugänge realisieren. Das Grundprinzip eines satellitengestützten Zugangsnetzes ergibt sich aus der Fig. 1. Ein Internet-Benutzer 2 wählt sich über sein Modem 8 über seinen Festnetzanschluß G bei dem Provider 4 über dessen Einwahlknoten 1 ein. Der POP des Internet-Service Providers verfügt über zahlreiche Einwählleitungen, welche mit dem Modem 9 und der Verbindung H zum Einwählknotenrechner 1 symbolisch dargestellt sind. Über den Backbone A des Internet-Service Providers gelangen die Anfragen vom Benutzer 2 zum Server 4 des Internet-Providers. Über die Schnittstelle IN zum Internet 3 werden die vom Benutzer 2 angeforderten Daten vom Server über dessen Verbindung B zu einer Satellitensendeanlage 5 (Hub Satelliten-Uplink) übertragen. Die Satellitenanlage 5 sendet die angeforderten Daten zu einem in einer geostationären Bahn stationierten Satelliten 6, von wo aus die Daten zur Satellitenempfangsanlage 7 des Benutzers gesendet werden. Die Satellitenempfangsanlage 7 überträgt über eine Schnittstelle E die angeforderten Daten in den Computer des Benutzers 2. Die Datenübertragung erfolgt bei herkömmlichen Systemen mit relativ niedrigen Übertragungsraten auf dem Down-Link-Pfad (vom Benutzer zum Provider) und mit sehr hohen Übertragungsraten auf dem Up-Link-Pfad (vom Service Provider zum Benutzer über Satellit). Der Vorteil der vorbeschriebenen satellitengestützten Lösung liegt in der flächendeckenden Verfügbarkeit.

Das gattungsgemäße satellitengestütze Kommunikationssystem bezieht sich nicht nur auf Netzwerke, bei denen Benutzer bzw. Datenübertragungspartner sich bei Internet-Providern einwählen. Ganz genauso kann das gattungsgemäße satellitengestütze Kommunikationssystem für die Kommunikation mit Unternehmensnetzwerken dienen, bei denen sich zum Beispiel Mitarbeiter oder Kunden in das betriebsinterne Netzwerk von außen einwählen können, um insbesondere größere Datenmengen aus diesem Netzwerk oder zum Beispiel von einem Datenserver herunterzuladen.

Nachteilig an der vorbeschriebenen satellitengestützten Lösung ist jedoch das Fehlen eines preisgünstigen Rückkanals über Satellit. Auf Basis der heute eingesetzten Satellitentechnik ist heute z.B. nur das relativ teure satellitengestützte Iridium®-Mobilfunknetz bekannt. Aus diesem Grund werden bei den heute verfügbaren Systemen zur (interaktiven) Verteilung von Internet-Inhalten die erforderlichen Rückkanäle in der Regel über terrestrische Telefonverbindungen (Modem- oder ISDN-Wählverbindung) geführt. Zur interaktiven Nutzung des Internets muß wie vorbeschrieben daher stets neben der Satellitenverbindung eine terrestrische Einwählverbindung aufgebaut werden. Dies hat für den Nutzer stets den Nachteil, daß neben den Kosten für die Satellitenverbindung zusätzlich die Kosten für eine Einwählverbindung anfallen, die in der Regel zudem zeitabhängig tarifiert werden. Aufgrund der stark asymmetrischen Verkehrscharakteristik bei der Nutzung des Internets, das heißt es werden stets mehr Daten vom Internet zum Benutzer übertragen als vom Benutzer zum Internetprovider, wird die Übertragungsstrecke vom Benutzer zum Einwählknoten des Internet-Providers sehr wenig bei satellitengestützten Übertragungssystemen beansprucht.

Aufgabe der vorliegenden Erfindung ist es daher, ein Kommunikationssystem bereitszustellen, das Nachteile des vorbeschriebenen Stands der Technik vermeidet.

Diese Aufgabe wird erfindungsgemäß durch ein satellitengestütztes Kommunikationssystem mit den Merkmalen des Anspruchs 1 gelost.

Bei dem erfindungsgemäßen satellitengestützen Kommunikationssystem kann sich der erste Partner - zum Beispiel ein Benutzer des Internets - über ein terrestrische Mobilfunkverbindung bei dem zweiten Partner, welcher zum Beispiel ein Internet-Provider oder ein Unternehmensnetzwerk ist, einwählen. Einmal aufgebaut kann die terrestrische Mobilfunkverbindung beliebig lang aufrecht erhalten werden, da bei den heute bekannten terrestrischen Mobilfunkverbindungen vorteilhaft paketorientierte Übertragungsprotokolle verwendet werden, wobei die Kosten für die Verbindung vorteilhaft nur von der Menge der übertragenen Daten abhängig gemacht werden kann. Sofern keine Daten über die Mobilfunkverbindung übertragen werden, fallen vorteilhaft keine Kosten für den Benutzer der Verbindung an. Die Verwendung einer Mobilfunkverbindung für insbesondere den Down-Link zwischen den beiden Partner hat somit den Vorteil, daß sie kostengünstig permanent aufrechterhalten bleiben kann und somit bei zeitlich weit auseinanderliegenden Anfragen durch den ersten Partner nicht ständig neue Einwählvorgänge stattfinden müssen.

Die Kombination aus terrestrischer Mobilfunkverbindung für den Down-Link und der Satellitenübertragung für den Up-Link verbindet vorteilhaft die modernsten Techniken zu einem leistungsstarken und komfortablen System, daß insbesondere flächendeckend verfügbar ist.

Ein weiterer Vorteil einer Variante des erfindungsgemäßen satellitengestützen Kommunikationssystems ist, daß zusätzlich zur Satellitenübertragung Daten vom zweiten Partner, das heißt zum Beispiel dem Internet-Provider, an den ersten Partner, das heißt an den Benutzer oder Kunden des Internet-Service Providers über die terrestrische Mobilfunkverbindung übertragen werden können. Dies kann unter anderem aus sicherheitstechnischen Gründen notwendig sein. Da in der Regel die Übertragung von Daten über Satelliten höhere Kosten verursacht, können bei kleineren angeforderten Datenmengen diese über die kostengünstigere Mobilfunkverbindung übertragen werden. Derartige Daten können zum Beispiel kleinere E-mails oder besonders sicherheitsrelevante E-Commerce-Daten sein. Von Vorteil ist hierbei, daß bei einer besonderen Ausführungsvariante des erfindungsgemäßen Kommunikationssystems der erste Partner bzw. der Benutzer des Systems vorbestimmen kann, welche Art von Daten über die Satellitenstrecke bzw. die terrestrische Mobilfunkverbindung übertragen werden soll.

Nachfolgend werden anhand von Zeichnungen zwei mögliche Ausführungsformen des erfindungsgemäßen satellitengestützten Kommunikationssystems näher erläutert.

Es zeigen:
- Fig. 1:: ein gattungsgemäßes satellitengestütztens Kommunikationssystem;
- Fig. 2:: eine erste Ausführungsform des erfindungsgemäßen satellitengestützten Kommunikationssystems;
- Fig. 3:: eine zweite Ausführungsform des erfindungsgemäßen satellitengestützten Kommunikationssystems.

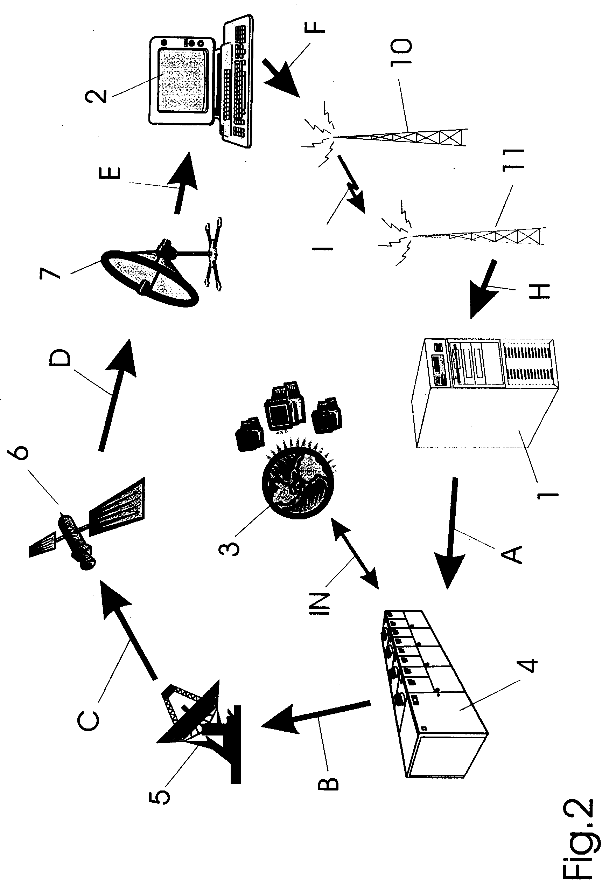

Fig. 2 zeigt eine erste Ausführungsform des erfindungsgemäßen satellitengestützten Kommunikationssystems, bei dem ein Benutzer mit seiner Datenverarbeitungsanlage 2 über eine terrestrische Mobilfunkverbindung, dargestellt durch die beiden Sende- und Empfangsmasten 10 und 11 und die Übertragungsstrecke I mit einem Einwählknoten 1 eines zweiten Partners, bzw. Internet-Providers 4, in Verbindung ist bzw. gelangen kann. Hierzu ist die Datenverarbeitungsanlage 2 über eine Schnittstelle F mit einer Signale aussendenen und empfangenden Antenne 10 in Verbindung. Über die Übertragungsstrecke K werden sämtliche erforderlichen Daten zwischen dem Einwählknoten 1 und der Datenverarbeitungsanlage 2 übertragen. Hierzu ist beim Einwählknoten 1 eine Sende- und Empfangsantenne 11 aufgestellt, welche die Daten über eine Schnittstelle H an den Einwählknoten 1 sendet. Über ein Backbone A ist der Einwählknoten 1 mit dem Zentralrechner bzw. einem Server 4 eines Internet-Providers oder eines Unternehmens verbunden. Gemäß den Anforderungen der Datenverarbeitungsanlage 2 werden Daten über die Internetverbindung IN aus dem weltweitem Internet 3 in den Server 4 übertragen, von wo sie aus über die Übertragungsstrecke B zu einer Satellitensendeanlage 5 gelangen, welche sie per Funk an einen Satelliten 6 sendet. Der Satellit 6 ist vorzugsweise in einer geostationären Bahn positioniert, so daß eine Nachführung der Empfangsanlage 7 nicht notwendig ist. Vom Satelliten 6 werden die Daten zur Erde ausgestrahlt und gelangen über die Schnittstelle E in die Datenverarbeitungsanlage 2 des Benutzers.

Bei der in Fig. 2 dargestellten Ausführungsvariante werden außer für die Erhaltung der Mobilfunkverbindung benötigter Daten keine Daten vom Server 4 zur Datenverarbeitungsanlage 2 übertragen. Der Datenfluß vom Server 4 geschieht allein über die Satellitenverbindung.

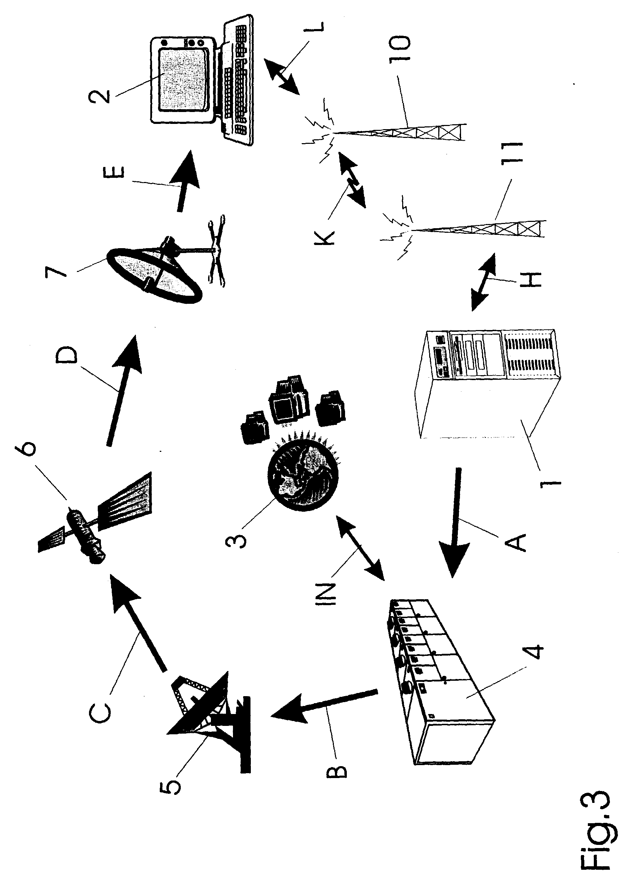

Bei der in Fig. 3 dargestellten Variante wird die Mobilfunkverbindung ebenfalls zur Übertragung von Daten vom Server 4 zur Datenverarbeitungsanlage 2 verwendet. Hierdurch erhöht sich die mögliche Übertragungsrate durch die Addition der Übertragungskapazitäten von Satelliten übertragung und terrestrischer Mobilfunkübertragung. Die Ausführungsvariante gemäß der Fig. 3 eignet sich besonders zur Übertragung auch von kleineren Datenmengen über die terrestrische Mobilfunkverbindung K, sofern durch die Tarifierung eine Übertragung per Satellit der Daten nicht sinnvoll ist.

Es versteht sich von selbst, daß die beispielhaft in den Figuren 2 bis 3 dargestellte Verbindung IN zum Internet 3 zum Beispiel durch eine einzelne Verbindung zu einem zum Beispiel betriebsinternen Netzwerk ersetzt werden kann. Ebenso ist es möglich, zwischen die einzelnen Stationen der Übertragungsstrecken weitere Übertragungstrecken zwischenzuschalten ohne vom Erfindungsgedanken abzuweichen.

## Patentansprüche

1. Satellitengestütztes Kommunikationssystem für den Austausch von Informationen zwischen zwei Partnern, wobei der zweite Partner über eine Satellitenübertragungsstrecke Daten an den ersten Partner überträgt, **dadurch gekennzeichnet,** daß der erste Partner über eine terrestrische Mobilfunkverbindung Daten an den zweiten Partner überträgt.

2. Satellitengestütztes Kommunikationssystem nach Anspruch 1, **dadurch gekennzeichnet,** daß zusätzlich zur Satellitenübertragung Daten vom zweiten Partner an den ersten Partner über die terrestrische Mobilfunkverbindung übertragen werden.

3. Satellitengestütztes Kommunikationssystem nach Anspruch 1 oder 2, **dadurch gekennzeichnet,** daß je nach zu übertragendem Datenvolumen oder Art der zu übertragenden Daten die Daten über die terrestrische Mobilfunkverbindung oder über den Satelliten vom zweiten Partner zum ersten Partner übertragen werden.

4. Satellitengestütztes Kommunikationssystem nach Anspruch 3, **dadurch gekennzeichnet,** daß vom ersten Partner vorgebbar ist, welche Art von Daten, wie z.B. E-Mails, E-Commerce-Daten, ausschließlich über die terrestrische Mobilfunkverbindung vom zweiten Partner an den ersten Partner übertragen werden sollen.

5. Satellitengestütztes Kommunikationssystem nach Anspruch 3 oder 4, **dadurch gekennzeichnet,** daß vom ersten Partner vorgebbar ist, bis zu welchem Datenvolumen die zu übertragenden Daten ausschließlich über die terrestrische Mobilfunkverbindung vom zweiten Partner an den ersten Partner übertragen werden sollen.

6. Satellitengestütztes Kommunikationssystem nach einem der Ansprüche 3 bis 5, **dadurch gekennzeichnet,** daß ein Teil der zu übertragenden Daten über die terrestrische Mobilfunkverbindung und der übrige Teil der zu übertragenden Daten per Satellit an den ersten Partner übertragen wird.

7. Satellitengestütztes Kommunikationssystem nach einem der vorhergehenden Ansprüche, **dadurch gekennzeichnet,** daß die Datenübertragung zumindest bei der terrestrischen Mobilfunkverbindung mittels paketvermittelnden Datendiensten oder paketorientierten Netzprotokollen, insbesondere dem GPRS- oder dem UMTS-Protokoll der GSM-Mobilfunknetze erfolgt.

8. Satellitengestütztes Kommunikationssystem nach einem der vorhergehenden Ansprüche, **dadurch gekennzeichnet,** daß eine permanente terrestrische Mobilfunkverbindung zwischen den Partnern besteht.

9. Satellitengestütztes Kommunikationssystem nach einem der vorhergehenden Ansprüche, **dadurch gekennzeichnet,** daß der erste Partner ein Benutzer und der zweite Partner ein Internetprovider ist.

10. Satellitengestütztes Kommunikationssystem nach einem der vorhergehenden Ansprüche, **dadurch gekennzeichnet,** daß der Zähler für die Gebührenberechnung des Benutzers nur dann erhöht wird, wenn Daten zwischen dem Benutzer und dem Internetprovider übertragen werden.
